# EUROPEAN PATENT APPLICATION

(11) **EP 4 692 598 A1**
(43) Date of publication of application: **11.02.2026**
(21) Application number: 24193493.4
(22) Date of filing: 08.08.2024
(51) Int. Cl.: F16H 57/00, F16H 57/08, F16H 57/021

(54) **AN ELECTRIC AXLE ASSEMBLY FOR A VEHICLE**

(71) Applicant: Volvo Truck Corporation, 405 08 Göteborg (SE)
(72) Inventor: HEDMAN, Anders, 442 67 MARSTRAND (SE)
(74) Representative: Kransell & Wennborg KB

(57) **Abstract**

An electric axle assembly (100) for a vehicle, comprising:
a planetary gearset (110) comprising a sun gearwheel (111), a planet carrier (112) carrying a plurality of planet gearwheels (113), and a ring gearwheel (114),
a first drive shaft (121) rotatably passing through the sun gearwheel,
a first gear engaging device (115) configured to selectively engage or disengage the sun gearwheel to respectively enable or disable torque transfer via the planetary gearset to the first drive shaft (121),
wherein the sun gearwheel, when disengaged, is not supported against any fixed component apart from the planetary gearset (110), and
wherein a plain bearing (150) is arranged between the sun gearwheel and the first drive shaft.

## Description

### TECHNICAL FIELD

The disclosure relates generally to electric vehicles and electric powertrains of such vehicles. In particular aspects, the disclosure relates to an electric axle assembly for a vehicle, and a vehicle comprising such an axle assembly. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A powertrain for a vehicle may comprise a prime mover which is drivingly connected to at least one pair of drive wheels via a transmission. The transmission is typically configured to provide two or more different speed ratios between the prime mover and the at least one pair drive wheels. A differential gearset may further be used to allow drive wheels of the at least one pair of drive wheels to rotate with different rotational speeds.

In recent years, there has been a trend towards developing powertrains with at least one electric prime mover, i.e., with at least one electric motor for propulsion of the vehicle. In view of this, there is a strive to develop improved technology relating to electric powertrains for vehicles.

### SUMMARY

According to a first aspect of the disclosure, an electric axle assembly for a vehicle is provided. It comprises:
a planetary gearset comprising a sun gearwheel, a planet carrier carrying a plurality of planet gearwheels, and a ring gearwheel,
a first drive shaft rotatably passing through the sun gearwheel,
a first gear engaging device configured to selectively engage or disengage the sun gearwheel to respectively enable or disable torque transfer via the planetary gearset to the first drive shaft,
wherein the sun gearwheel, when disengaged, is not supported against any fixed component apart from the planetary gearset, and
wherein a plain bearing is arranged between the sun gearwheel and the first drive shaft.

The first aspect of the disclosure may seek to provide an in at least some aspect improved electric axle assembly for a vehicle. In particular, it may seek to provide such an electric axle assembly in which problems with gear tooth wear and difficulties to engage a gear are reduced. A technical benefit may include a reduced risk of tipping of the sun gearwheel relative to the first drive shaft, by means of the plain bearing provided between the sun gearwheel and the first drive shaft. The plain bearing may serve to support the sun gearwheel in its disengaged state, such as in neutral gear or during a gear shifting process. By reducing the risk of tipping of the sun gearwheel, it may be possible to reduce wear on gear teeth of the sun gearwheel, as well as to facilitate gear engagement, since wobbling motion of the sun gearwheel in its disengaged state may be prevented.

The electric axle assembly as disclosed herein may comprise at least one electric machine configured to provide torque for driving the vehicle, a transmission arrangement configured to convert the torque provided from the at least one electric machine, and one or more drive shafts, each drive shaft transferring torque from the transmission arrangement to at least one driven ground engaging member of the vehicle. The planetary gearset may form part of the transmission arrangement. A differential gearset may further be provided, distributing torque between the drive shafts and allowing the ground engaging members to rotate at different rotational speeds.

Optionally in some examples, including in at least one preferred example, the plain bearing is configured to limit misalignment of the sun gearwheel relative to the first drive shaft when the sun gearwheel is disengaged. A technical benefit may include a reduced risk of tipping of the sun gearwheel in its disengaged state.

Optionally in some examples, including in at least one preferred example, the plain bearing comprises a first bearing surface provided on the sun gearwheel and a second bearing surface provided on the first drive shaft, wherein the plain bearing is configured such that the first and second bearing surfaces are not in contact with one another when the sun gearwheel is engaged by the first gear engaging device. A technical benefit may include reduced friction in an engaged state of the sun gearwheel, i.e., during torque transfer, since over-constraining of the sun gearwheel may be prevented.

Optionally in some examples, including in at least one preferred example, a diameter difference between the first and second bearing surfaces is sufficiently large to allow centring of the sun gearwheel by gear mesh forces applied by the planet gearwheels, when the sun gearwheel is engaged and torque is transferred via the planetary gearset to the first drive shaft. A technical benefit may include that over-constraining of the sun gearwheel is prevented in the engaged state, thanks to a sufficiently large radial clearance between the bearing surfaces. Hence, unequal load distribution between sun-planet gear meshes is prevented.

Optionally in some examples, including in at least one preferred example, a diameter difference between the first and second bearing surfaces is at least 0.4 mm, preferably at least 0.5 mm. A technical benefit may include a sufficiently large radial clearance to avoid over-constraining of the sun gearwheel in the engaged state.

Optionally in some examples, including in at least one preferred example, a diameter difference between the first and second bearing surfaces is sufficiently small to prevent two-flank contact between meshing surfaces of the sun gearwheel and the planet gearwheels when the sun gearwheel is disengaged. A technical benefit may include reduced noise, friction, and wear of the gear teeth of the sun gearwheel and the planet gearwheels that may otherwise be caused by misalignment in the disengaged state of the sun gearwheel.

Optionally in some examples, including in at least one preferred example, a diameter difference between the first and second bearing surfaces is less than or equal to 1 mm, preferably less than or equal to 0.8 mm. A technical benefit may include a sufficiently small radial clearance to avoid two-flank contact between meshing surfaces of the sun gearwheel and the planet gearwheels in the disengaged state.

Optionally in some examples, including in at least one preferred example, the plain bearing comprises a ring member attached to an inner peripheral surface of the sun gearwheel, or to an outer peripheral surface of the first drive shaft. A technical benefit may include quick adaptation of a standard component. Whether the ring member is attached to the sun gearwheel or to the first drive shaft may be determined by taking the transmission configuration and a mounting sequence of the electric axle assembly into account.

Optionally in some examples, including in at least one preferred example, the plain bearing comprises a protruding annular portion of the sun gearwheel or of the first drive shaft. This is an alternative way of providing the plain bearing, that may provide a robust arrangement. A ring member in combination with a protruding annular portion may in some examples be used.

Optionally in some examples, including in at least one preferred example, the sun gearwheel, when engaged, is supported against a fixed component via at least the first gear engaging device. A technical benefit may include good mechanical support in the engaged state.

Optionally in some examples, including in at least one preferred example, the first gear engaging device is configured to be set to one of three positions, comprising:
an engaged first position in which it engages the sun gearwheel to a fixed component and in which power transfer via the ring gearwheel is enabled,
a disengaged second position in which it disengages the sun gearwheel and no torque transfer is possible, and
an engaged third position in which it engages the sun gearwheel to an input component configured to be drivingly connected to an electric machine.

By "drivingly connected" is herein intended that the input component is configured to be driven by the electric machine, either directly or via other components, such as via a set of gears. A technical benefit may include that at least two gear ratios for torque transfer may be achieved.

Optionally in some examples, including in at least one preferred example, the electric axle assembly further comprises a second gear engaging device configured to selectively engage the ring gearwheel to one of the input component and a fixed component, or to disengage the ring gearwheel. A technical benefit may include a larger selection of gear ratios by using the first and second gear engaging devices.

Optionally in some examples, including in at least one preferred example, the first and second gear engaging devices are configured to together provide three selectable gear ratios and a neutral gear. A technical benefit may include a sufficient range of gear ratios for an electric heavy-duty vehicle, ensuring startability as well as efficiency at cruising speeds.

Optionally in some examples, including in at least one preferred example, the electric axle assembly comprises an electric machine configured to be drivingly connected to the planetary gearset, wherein the electric machine has an output shaft oriented in parallel with and radially offset from the first drive shaft.

Optionally in some examples, including in at least one preferred example, the electric axle assembly further comprises a differential gearset configured to distribute torque between the first drive shaft and a second drive shaft. A technical benefit may include the powering of two drive shafts, each driving at least one driven wheel on the same axle of the vehicle.

Optionally in some examples, including in at least one preferred example, the planet carrier of the planetary gearset is fixed for common rotation with a differential planet carrier of the differential gearset. A technical benefit may include a compact configuration of the electric axle assembly.

According to a second aspect of the disclosure, a vehicle comprising the electric axle assembly of the first aspect is provided. The vehicle may be a heavy-duty vehicle such as a truck, a bus, or a construction machine. Advantages and effects of the second aspect of the disclosure are largely analogous to the advantages and effects of the first aspect of the disclosure.

Optionally in some examples, including in at least one preferred example, the first drive shaft is arranged for driving at least one ground engaging member of the vehicle, such as at least one driven wheel of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a perspective view of an exemplary vehicle in according to an example.
**FIG. 2** is a schematic view of an exemplary electric axle assembly according to an example.
**FIG. 3** is a schematic view of parts of an electric axle assembly according to an example.
**FIG. 4** is a schematic view of parts of an electric axle assembly according to another example.
**FIG. 5** is a schematic view of parts of an electric axle assembly according to yet another example.
**FIG. 6a** is a schematic view of parts of an electric axle assembly, illustrating radial two-flank contact.
**FIG. 6b** is a sectional view of parts of an electric axle assembly, illustrating radial two-flank contact.
**FIG. 7** is a schematic view of parts of an electric axle assembly, illustrating skew two-flank contact.
**FIG. 8** is a sectional view along the dash-dotted line VIII in FIG. 7.
**FIG. 9a** is a schematic view of parts of an electric axle assembly.
**FIG. 9b** is a sectional view along the line IXb-IXb in FIG. 9a.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the disclosure.

An electric axle assembly of a heavy-duty vehicle may also be referred to as an e-axle. It comprises one or more electric machines, a transmission arrangement configured to convert the torque provided from the electric machine, and one or more drive shafts, each drive shaft driving at least one driven ground engaging member. A differential may be provided in connection with the transmission to allow drive wheels on the same axle, driven by separate drive shafts, to rotate with different rotational speed.

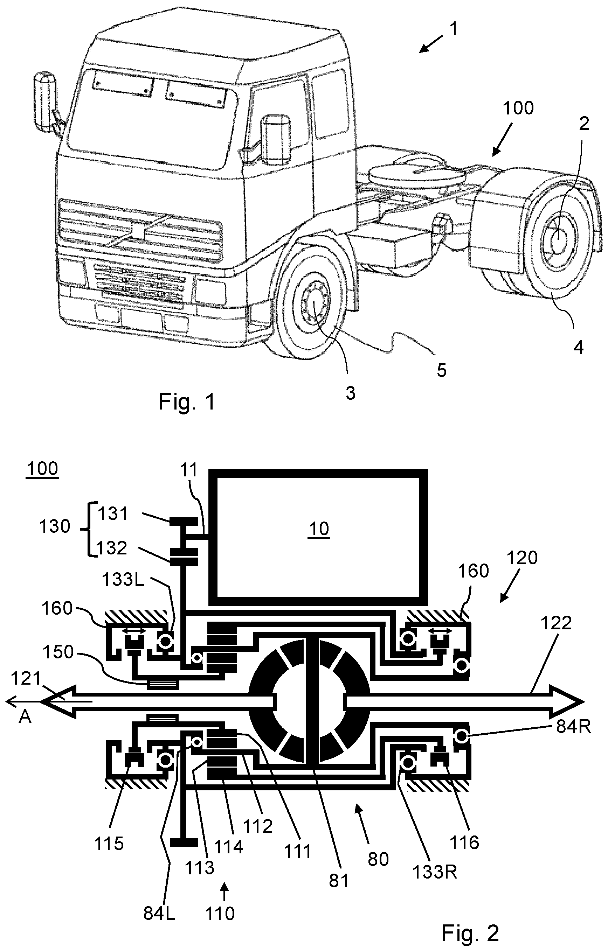

**FIG. 1** schematically shows an exemplary vehicle 1 according to an example. The vehicle 1 is herein a heavy-duty truck, and more particularly a towing truck for towing one or more trailers (not shown). It shall however be noted that the present disclosure is applicable to any other vehicle, such as any other truck, a bus, a passenger car, construction equipment, such as a wheel loader, an excavator, a dump truck etc.

The vehicle 1 is an electric vehicle comprising a driven rear axle 2 and a non-driven front axle 3. In other examples, the front axle may be a driven axle and the rear axle may be a non-driven axle, or both axles may be driven axles. Furthermore, the vehicle may comprise more than two axles, of which one or more may be driven. A pair of driven wheels 4 is provided on the rear axle 2 and a pair of non-driven wheels 5 is provided on the front axle 3. In other examples, other types of ground engaging members may be used instead of wheels, such as crawlers.

The driven rear axle 2 may as shown comprise an electric axle assembly 100 according to examples of the present disclosure. The electric axle assembly 100 comprises a prime mover (not shown) in the form of an electric motor which is drivingly connected to the driven wheels 4 via a transmission arrangement (not shown).

**FIG. 2** illustrates an exemplary electric axle assembly 100 according to an example of the disclosure. The electric axle assembly 100 comprises an electric motor 10 configured to drive an electric motor output shaft 11. The electric motor output shaft 11 is via an input reduction gearset 130 drivingly connected to a transmission arrangement 120. The input reduction gearset 130 herein comprises a first gearwheel 131 and a second gearwheel 132, forming an input component 132 of the transmission arrangement 120. The transmission arrangement 120 comprises a planetary gearset 110 and a differential gearset 80 configured to distribute torque produced by the electric motor 10 to two drive shafts 121, 122 extending along a common rotational axis A. The electric motor output shaft 11 is in the illustrated example oriented in parallel with and radially offset from the first drive shaft 121, although in other examples, other configurations are possible, such as a perpendicular orientation of the electric motor output shaft and the first drive shaft.

The planetary gearset 110 comprises a sun gearwheel 111, a planet carrier 112 carrying a plurality of planet gearwheels 113, and a ring gearwheel 114. A first drive shaft 121 of the two drive shafts 121, 122 is coaxial with the sun gearwheel 111 and is arranged such that it passes rotatably through the sun gearwheel 111. In the illustrated example, the planetary gearset 110 and the differential gearset 80 are both arranged inside the input component 132, with a differential planet carrier 81 of the differential gearset 80 fixed for common rotation with the planet carrier 112 of the planetary gearset 110. In other examples, the planetary gearset and/or the differential may be provided outside of the input component. The planet carrier 112 and the differential planet carrier 81 are supported against a fixed component 160 of the transmission arrangement 120, such as a housing, by a first bearing 84R, enabling rotation of the planet carrier 112 and the differential planet carrier 81 relative to the fixed component 160. The planet carrier 112 and the differential planet carrier 81 are further supported against the input component 132 by a second bearing 84L, enabling rotation of the planet carrier 112 and the differential planet carrier 81 relative to the input component 132.

A first gear engaging device 115 is configured to selectively engage or disengage the sun gearwheel 111 to respectively enable or disable torque transfer via the planetary gearset 110 to the first drive shaft 121. This may be achieved by moving the first gear engaging device 115 back and forth along the common rotational axis A, as illustrated by a double-ended arrow in FIG. 2, between an engaged first position (left), a disengaged second position (middle), and an engaged third position (right). In the first position, to the left in FIG. 2, it engages the sun gearwheel 111 to a fixed component 160 and power transfer via the ring gearwheel 114 is enabled. In the second position, shown in FIG. 2, it disengages the sun gearwheel 111 and no torque transfer is possible. In the third position, to the right in FIG. 2, it engages the sun gearwheel 111 to the input component 132, which is in turn drivingly connected to the electric machine 10.

In the engaged first and third positions of the first gear engaging device 115, the sun gearwheel 111 is supported against the fixed component 160 via at least the first gear engaging device 115. In the first position, it is directly coupled to the fixed component 160 via the first gear engaging device 115. In the third position, it is coupled to the fixed component 160 via the first gear engaging device 115, the input component 132, and third and fourth bearings 133L, 133R provided on opposite sides of the transmission arrangement. The third and fourth bearings 133L, 133R supports the input component 132 against the fixed component 160 and enables it to rotate with respect to the fixed component 160.

The third and fourth bearings 133L, 133R as well as the first and second bearings 84R, 84L may be any kind of sliding or rolling bearings, such as ball and/or roller bearings. For example, any one of the bearings 133L, 133R, 84L, 84R may be a deep groove ball bearing, an angular contact ball bearing, a tapered roller bearing, or any other rolling bearing. As shown, the bearings 133L, 133R, 84L, 84R are also arranged to rotate about the common rotational axis A. The bearings 133L, 133R, 84L, 84R may thus be arranged to accommodate radial as well as axial loads in any direction along the common rotational axis A.

In the illustrated example, the electric axle assembly further comprises a second gear engaging device 116 configured to selectively engage the ring gearwheel 114 to one of the input component 132 and the fixed component 160, or to disengage the ring gearwheel 114 in a disengaged, middle position of the second gear engaging device 116. The first and second gear engaging devices 115, 116 are in the illustrated example configured to together provide three selectable gear ratios and a neutral gear. In the neutral gear, at least one of the gear engaging devices 115, 116, preferably both gear engaging devices 115, 116, is/are set to the disengaged position(s).

The three selectable gear ratios may be provided by selectively:
1) setting the first gear engaging device 115 to its engaged third position (right) and setting the second gear engaging device 116 to engage the ring gearwheel 114 to the fixed component 160 (right position);
2) setting the first gear engaging device 115 to its engaged first position (left) and setting the second gear engaging device 116 to drivingly connect the ring gearwheel 114 and the input component 132 (left position), and
3) setting the first gear engaging device 115 to its engaged third position (right) and setting the second gear engaging device 116 to drivingly connect the ring gearwheel 114 and the input component 132 (left position).

The first and second gear ratios described above typically provide a first and a second respective speed reduction from the input component 132 to the driven wheels 4 of the vehicle 1, and the third gear ratio is a direct 1:1 connection with no speed difference. Typically, the first gear ratio provides a larger speed reduction than the second gear ratio.

The first and second gear engaging devices 115, 116 may be controlled, i.e., moved axially back and forth along the common rotational axis A, by use of one or more actuators (not shown). The one or more actuators may be automatically controlled by a transmission control unit (not shown) and/or controlled based on input from a user, e.g., a driver of the vehicle 1. Respective shift forks (not shown) may further be provided in-between the first and second gear engaging members 115, 116 and the one or more actuators.

It shall be noted that in some examples, only one gear engaging device may be used, such as only the first gear engaging device 115.

In the disengaged second position of the first gear engaging device 115, the sun gearwheel 111 is not supported against any fixed component apart from the planetary gearset 110. Due to the configuration of the transmission 120, with the first gear engaging device 115 being provided at a relatively long distance from the ring gearwheel 114 due to the bearings 84L, 133L, the sun gearwheel 111 has a relatively large axial extension along the common rotational axis A. As a consequence, it becomes sensitive to misalignment when disengaged. A plain bearing 150 is therefore arranged between the sun gearwheel 111 and the first drive shaft 121, configured to limit misalignment of the sun gearwheel 111 relative to the first drive shaft 151 when the sun gearwheel 111 is disengaged.

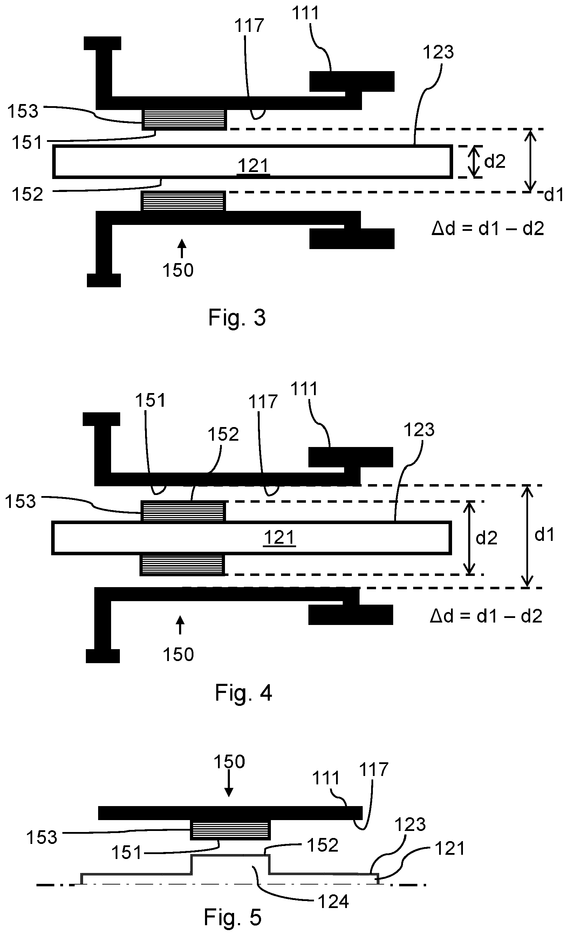

FIG. 3 schematically illustrates the plain bearing 150, the sun gearwheel 111 and the first drive shaft 121 according to a first example in greater detail, wherein the plain bearing 150 comprises a ring member 153 attached to an inner peripheral surface 117 of the sun gearwheel 111. The plain bearing 150 comprises a first bearing surface 151 provided on the ring member 153 mounted to the sun gearwheel 111, and an opposite second bearing surface 152 provided on a peripheral surface 123 of the first drive shaft 121. The plain bearing 150 is configured such that the first and second bearing surfaces 151, 152 are not in contact with one another when the sun gearwheel 111 is engaged by the first gear engaging device 115.

**FIG. 4** illustrates the plain bearing 150, the sun gearwheel 111 and the first drive shaft 121 according to a second example, wherein the ring member 153 is attached to the outer peripheral surface 123 of the first drive shaft 121 and wherein the second bearing surface is formed on the inner peripheral surface 117 of the sun gearwheel 111.

**FIG. 5** illustrates the plain bearing 150, the sun gearwheel 111 and the first drive shaft 121 according to a third example, wherein the ring member 153 is attached to the inner peripheral surface 117 of the ring gearwheel 111 and wherein the second bearing surface 152 is formed on a protruding annular portion 124 of the first drive shaft 121. In other examples, the bearing 150 may comprise two ring members, one on the first drive shaft and one on the sun gearwheel, and/or two protruding annular portions, one on the first drive shaft and one on the sun gearwheel. In yet other examples, the bearing 150 may comprise one or two protruding annular portion(s) and no ring member.

The plain bearing 150 is configured to allow the first drive shaft 121 to rotate relative to the sun gearwheel 111 when the sun gearwheel 111 is in one of the engaged first and third positions, and torque is transferred via the planetary gearset 110 to the first drive shaft 121. In these positions, a radial clearance provided between the sun gearwheel 111 and the first drive shaft 121 is sufficiently large so that there is no contact between the bearing surfaces 151, 152 of the plain bearing 150. In the disengaged position, such as in neutral gear or during gear shifting, the plain bearing 150 supports the sun gearwheel 110 against the first drive shaft 121 and prevents it from exaggerated tipping relative to the planet carrier 112 and the planet gearwheels 113. Hence, in the disengaged position, the bearing surfaces 151, 152 come into contact and prevent further tipping of the sun gearwheel 111. The plain bearing 150 may hence be configured to limit misalignment of the sun gearwheel 111 relative to the first drive shaft 151 when the sun gearwheel 111 is disengaged.

The plain bearing 150 allows relative movement of the sun gearwheel 111 and the first drive shaft 121 during shorter periods of time in the disengaged position of the first gear engaging device 115, such as during gear shifting. In neutral gear, no torque is transferrable between the electric motor 10 and the driven wheels of the vehicle 1. The sun gearwheel 111 and the first drive shaft 121 will typically rotate at the same or similar rotational speed, and the plain bearing 150 will accommodate any temporary and/or smaller differences in rotational speed.

The first bearing surface 151 is a circle cylindrical surface having a diameter d1 and the second bearing surface 152 is a circle cylindrical surface having a diameter d2. A diameter difference Δd = d1 - d2 between the first and second bearing surfaces 151, 152 should preferably be sufficiently large to allow centring of the sun gearwheel 111 by gear mesh forces applied by the planet gearwheels 113, when the sun gearwheel 111 is engaged, i.e., when the first gear engaging device 115 is in one of its engaged positions, and torque is transferred via the planetary gearset 110 to the first drive shaft 121. For most practical cases, this may be the case when the diameter difference Δd between the first and second bearing surfaces 151, 152 is at least 0.4 mm, preferably at least 0.5 mm. The planet gearwheels 113 are normally equally spaced around the sun gearwheel 111 and during torque transfer, it is desirable that the gear mesh forces arising in gear meshes between the sun gearwheel 111 and each one of the planet gearwheels 113 are allowed to centre the sun gearwheel 111 without being impeded by any external bearing. This will counteract any unequal load distribution.

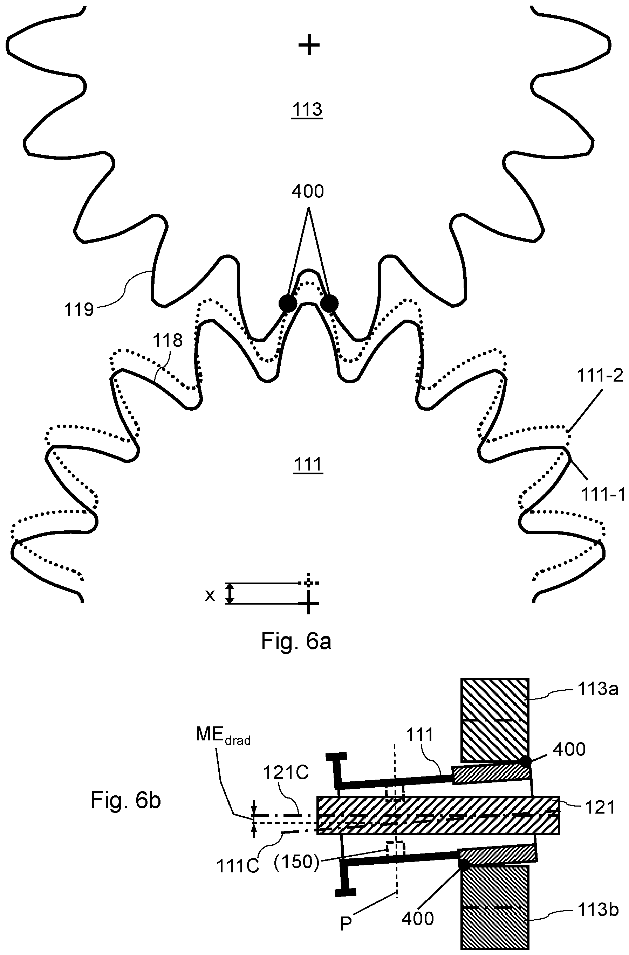

**FIG. 6a** illustrates the sun gearwheel 111 having a meshing surface 118, and a planet gearwheel 113 having a meshing surface 119, arranged for meshing engagement with one another. As illustrated in FIG. 6a, radial two-flank contact 400 may arise between the meshing surfaces 118, 119 if the meshing gearwheels 111, 113 are pushed towards one another as illustrated by the dotted line 111-2, representing the sun gearwheel 111 when displaced by the distance x relative to its nominal position illustrated by the solid line 111-1.

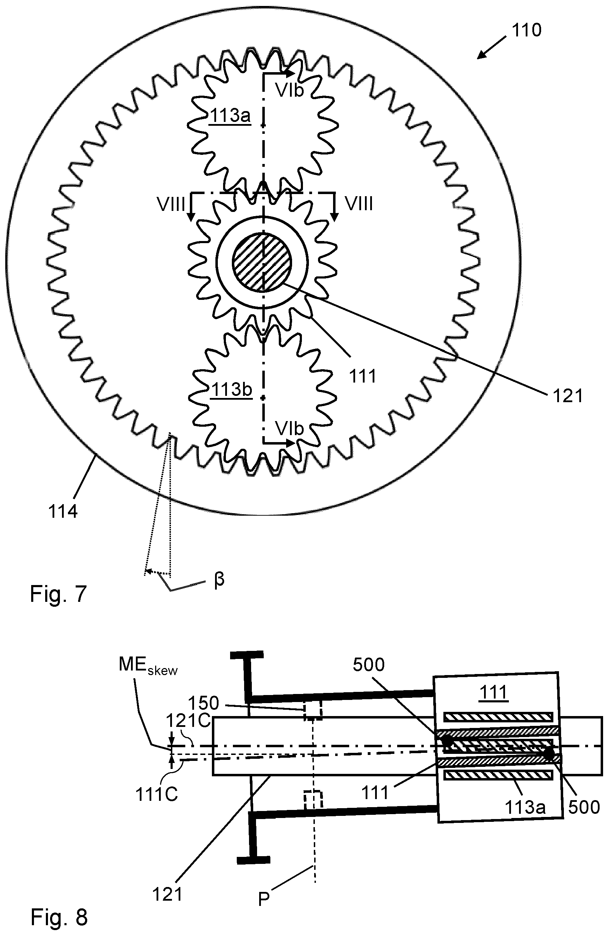

**FIG. 6b** is a sectional view according to dash-dotted line and arrows VIb-VIb in an exemplary axial view of the planetary gearset 110 in **FIG. 7****.** Fig. 6b illustrates a double radial two-flank contact 400 between the sun gearwheel 111 and two diametrically opposed planet gearwheels 113a, 113b. The intended axial position P of the plain bearing 150 is indicated, for the rest, FIG. 6b shows a potential situation without the plain bearing 150. The double radial two-flank contact 400 corresponds to an angular misalignment of a centre line 111C of the sun gearwheel 111 relative to a centre line 121C of the first drive shaft 121. At the position P, this angular misalignment gives a misalignment error ME_{drad} between the centre lines 111C and 121C. When present, the plain bearing 150 will limit the angle of misalignment and hence the risk of two-flank radial contact.

**FIG. 7** illustrates the planetary gearset 110 and the first drive shaft 121 passing through the sun gearwheel 111. Two planet gearwheels 113a, 113b are arranged diametrically opposed around the sun gearwheel 111. Sectional views shown in FIG. 6b and FIG. 8 are indicated by dash-dotted lines and arrows VIb-VIb, VIII-VIII.

**FIG. 8** is a sectional view of the planetary gearset 110 along the dash-dotted line and arrows VIII-VIII in FIG. 7. As illustrated in FIG. 8, in addition to double radial two-flank contact 400, skew two-flank contact 500 may arise in the gear meshes between the planet gearwheels 113a, 113b and the sun gearwheel 111 in a plane perpendicular to the plane of misalignment shown in FIG. 6b. The plain bearing 150 should preferably be arranged to avoid such skew two-flank contact 500.

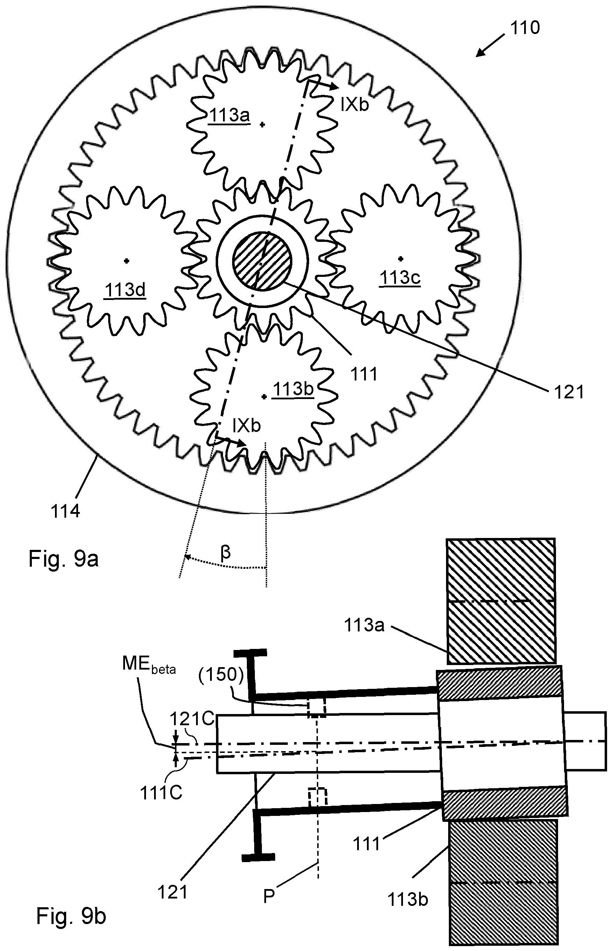

**FIG. 9a** shows a variant of the planetary gearset 110, with four equally spaced planet gearwheels 113a-113d arranged around the sun gearwheel 111. **FIG. 9b** is a sectional view according to dash-dotted line and arrows IXb-IXb in FIG. 9a, having an angle β to a vertical plane in FIG. 9a. Here, the misalignment between the sun gearwheel 111 and the first drive shaft 121 is determined by a combination of radial and skew two-flank contacts, giving a misalignment error ME_{beta} at the intended position P of the plain bearing 150.

Hence, the diameter difference Δd between the first and second bearing surfaces 151, 152 should preferably be sufficiently small to prevent the two-flank contacts 400, 500 between the meshing surfaces 118, 119 of the sun gearwheel 111 and the planet gearwheels 113 from arising when the sun gearwheel 111 is disengaged. To achieve this, it is in most practical cases sufficient that the diameter difference Δd between the first and second bearing surfaces 151, 152 is less than or equal to 1 mm, preferably less than or equal to 0.8 mm. As illustrated FIGS 6b, 7, and 9b, the actual dimension of the plain bearing 150 may be selected depending on its position relative to the sun gearwheel 111 and the dimensions of the planetary gearset 110 and the first drive shaft 121. For each misalignment orientation angle β, there is a corresponding misalignment error ME_{beta} at an intended axial position P of the plain bearing 150. With the plain bearing 150 in place, the misalignment error should be smaller, with safety margin, than a minimum misalignment error MEₘᵢₙ, which is the minimum value that ME_{beta} attains for values of β between 0 and 360 degrees. The diameter difference Δd should preferably be smaller than 1.8 MEₘᵢₙ, more preferably smaller than 1.6 MEₘᵢₙ.

In the following, possible features and feature combinations of the present disclosure are presented as a list of numbered examples:
Example 1. An electric axle assembly (100) for a vehicle (1), comprising:
   a planetary gearset (110) comprising a sun gearwheel (111), a planet carrier (112) carrying a plurality of planet gearwheels (113), and a ring gearwheel (114),
   a first drive shaft (121) rotatably passing through the sun gearwheel (111), a first gear engaging device (115) configured to selectively engage or disengage the sun gearwheel (111) to respectively enable or disable torque transfer via the planetary gearset (110) to the first drive shaft (121),
   wherein the sun gearwheel (111), when disengaged, is not supported against any fixed component apart from the planetary gearset (110), and
   wherein a plain bearing (150) is arranged between the sun gearwheel (111) and the first drive shaft (121).
Example 2. The electric axle assembly of example 1, wherein the plain bearing (150) is configured to limit misalignment of the sun gearwheel (111) relative to the first drive shaft (121) when the sun gearwheel (111) is disengaged.
Example 3. The electric axle assembly of example 1 or 2, wherein the plain bearing (150) comprises a first bearing surface (151) provided on the sun gearwheel (111) and a second bearing surface (152) provided on the first drive shaft (121), and wherein the plain bearing (150) is configured such that the first and second bearing surfaces (151, 152) are not in contact with one another when the sun gearwheel (111) is engaged by the first gear engaging device (115).
Example 4. The electric axle assembly of example 3, wherein a diameter difference (Δd) between the first and second bearing surfaces (151, 152) is sufficiently large to allow centring of the sun gearwheel (111) by gear mesh forces applied by the planet gearwheels (113, 113a-d), when the sun gearwheel (111) is engaged and torque is transferred via the planetary gearset (110) to the first drive shaft (121).
Example 5. The electric axle assembly of example 3 or 4, wherein a diameter difference (Δd) between the first and second bearing surfaces (151, 152) is at least 0.4 mm, preferably at least 0.5 mm.
Example 6. The electric axle assembly of any one of examples 3-5, wherein a diameter difference (Δd) between the first and second bearing surfaces (151, 152) is sufficiently small to prevent two-flank contact (400, 500) between meshing surfaces (118, 119) of the sun gearwheel (111) and the planet gearwheels (113, 113a-d) when the sun gearwheel (111) is disengaged.
Example 7. The electric axle assembly of any one of examples 3-6, wherein a diameter difference (Δd) between the first and second bearing surfaces (151, 152) is less than or equal to 1 mm, preferably less than or equal to 0.8 mm.
Example 8. The electric axle assembly of any one of the preceding examples, wherein the plain bearing (150) comprises a ring member (153) attached to an inner peripheral surface (117) of the sun gearwheel (111), or to an outer peripheral surface (123) of the first drive shaft (121).
Example 9. The electric axle assembly of any one of the preceding examples, wherein the plain bearing (150) comprises a protruding annular portion (124) of the sun gearwheel or of the first drive shaft (121).
Example 10. The electric axle assembly of any one of the preceding examples, wherein the sun gearwheel (111), when engaged, is supported against a fixed component (160) via at least the first gear engaging device (115).
Example 11. The electric axle assembly of any one of the preceding examples, wherein the first gear engaging device (115) is configured to be set to one of three positions, comprising:
   an engaged first position in which it engages the sun gearwheel (111) to a fixed component (160) and in which power transfer via the ring gearwheel (114) is enabled,
   a disengaged second position in which it disengages the sun gearwheel (111) and no torque transfer is possible, and
   an engaged third position in which it engages the sun gearwheel (111) to an input component (132) configured to be drivingly connected to an electric machine (10).
Example 12. The electric axle assembly of example 11, further comprising a second gear engaging device (116) configured to selectively engage the ring gearwheel (114) to one of the input component (132) and a fixed component (160), or to disengage the ring gearwheel (114).
Example 13. The electric axle assembly of example 12, wherein the first and second gear engaging devices (115, 116) are configured to together provide three selectable gear ratios and a neutral gear.
Example 14. The electric axle assembly of any one of the preceding examples, comprising an electric machine (10) configured to be drivingly connected to the planetary gearset (110), wherein the electric machine (10) has an output shaft (11) oriented in parallel with and radially offset from the first drive shaft (121).
Example 15. The electric axle assembly of any one of the preceding examples, further comprising a differential gearset (80) configured to distribute torque between the first drive shaft (121) and a second drive shaft (122).
Example 16. The electric axle assembly of example 15, wherein the planet carrier (112) of the planetary gearset (110) is fixed for common rotation with a differential planet carrier (81) of the differential gearset (80).
Example 17. A vehicle (1) comprising the electric axle assembly (100) according to any of the preceding examples.
Example 18. The vehicle of example 17, wherein the first drive shaft (121) is arranged for driving at least one ground engaging member (4) of the vehicle (1).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric axle assembly (100) for a vehicle (1), comprising:
a planetary gearset (110) comprising a sun gearwheel (111), a planet carrier (112) carrying a plurality of planet gearwheels (113), and a ring gearwheel (114),
a first drive shaft (121) rotatably passing through the sun gearwheel (111),
a first gear engaging device (115) configured to selectively engage or disengage the sun gearwheel (111) to respectively enable or disable torque transfer via the planetary gearset (110) to the first drive shaft (121),
wherein the sun gearwheel (111), when disengaged, is not supported against any fixed component apart from the planetary gearset (110), and
wherein a plain bearing (150) is arranged between the sun gearwheel (111) and the first drive shaft (121).

2. The electric axle assembly of claim 1, wherein the plain bearing (150) is configured to limit misalignment of the sun gearwheel (111) relative to the first drive shaft (121) when the sun gearwheel (111) is disengaged.

3. The electric axle assembly of claim 1 or 2, wherein the plain bearing (150) comprises a first bearing surface (151) provided on the sun gearwheel (111) and a second bearing surface (152) provided on the first drive shaft (121), and wherein the plain bearing (150) is configured such that the first and second bearing surfaces (151, 152) are not in contact with one another when the sun gearwheel (111) is engaged by the first gear engaging device (115).

4. The electric axle assembly of claim 3, wherein a diameter difference (Δd) between the first and second bearing surfaces (151, 152) is sufficiently large to allow centring of the sun gearwheel (111) by gear mesh forces applied by the planet gearwheels (113, 113a-d), when the sun gearwheel (111) is engaged and torque is transferred via the planetary gearset (110) to the first drive shaft (121).

5. The electric axle assembly of claim 3 or 4, wherein a diameter difference (Δd) between the first and second bearing surfaces (151, 152) is at least 0.4 mm, preferably at least 0.5 mm.

6. The electric axle assembly of any one of claims 3-5, wherein a diameter difference (Δd) between the first and second bearing surfaces (151, 152) is sufficiently small to prevent two-flank contact (400, 500) between meshing surfaces (118, 119) of the sun gearwheel (111) and the planet gearwheels (113, 113a-d) when the sun gearwheel (111) is disengaged.

7. The electric axle assembly of any one of claims 3-6, wherein a diameter difference (Δd) between the first and second bearing surfaces (151, 152) is less than or equal to 1 mm, preferably less than or equal to 0.8 mm.

8. The electric axle assembly of any one of the preceding claims, wherein the plain bearing (150) comprises a ring member (153) attached to an inner peripheral surface (117) of the sun gearwheel (111), or to an outer peripheral surface (123) of the first drive shaft (121).

9. The electric axle assembly of any one of the preceding claims, wherein the plain bearing (150) comprises a protruding annular portion (124) of the sun gearwheel or of the first drive shaft (121).

10. The electric axle assembly of any one of the preceding claims, wherein the sun gearwheel (111), when engaged, is supported against a fixed component (160) via at least the first gear engaging device (115).

11. The electric axle assembly of any one of the preceding claims, wherein the first gear engaging device (115) is configured to be set to one of three positions, comprising:
an engaged first position in which it engages the sun gearwheel (111) to a fixed component (160) and in which power transfer via the ring gearwheel (114) is enabled,
a disengaged second position in which it disengages the sun gearwheel (111) and no torque transfer is possible, and
an engaged third position in which it engages the sun gearwheel (111) to an input component (132) configured to be drivingly connected to an electric machine (10).

12. The electric axle assembly of claim 11, further comprising a second gear engaging device (116) configured to selectively engage the ring gearwheel (114) to one of the input component (132) and a fixed component (160), or to disengage the ring gearwheel (114).

13. The electric axle assembly of claim 12, wherein the first and second gear engaging devices (115, 116) are configured to together provide three selectable gear ratios and a neutral gear.

14. The electric axle assembly of any one of the preceding claims, comprising an electric machine (10) configured to be drivingly connected to the planetary gearset (110), wherein the electric machine (10) has an output shaft (11) oriented in parallel with and radially offset from the first drive shaft (121).

15. A vehicle (1) comprising the electric axle assembly (100) according to any of the preceding claims.
